# EUROPEAN PATENT APPLICATION

(11) **EP 4 455 651 A1**
(43) Date of publication of application: **30.10.2024**
(21) Application number: 24166852.4
(22) Date of filing: 27.03.2024
(51) Int. Cl.: G01N 23/20058, G01N 23/2055

(54) **METHOD OF ANALYZING CRYSTAL STRUCTURE, CRYSTAL MORPHOLOGY, OR CRYSTAL DISTRIBUTION OF RUBBER MATERIAL IN STRETCHING**

(30) Priority: 25.04.2023 JP 2023071742
(71) Applicant: Tohoku University, Sendai-shi, Miyagi 980-8577 (JP); Sumitomo Rubber Industries, Ltd., Kobe-shi, Hyogo 651-0072 (JP)
(72) Inventor: JINNAI, Hiroshi, Sendai-shi, 980-8577 (JP); MIYATA, Tomohiro, Sendai-shi, 980-8577 (JP); WATANABE, Daisuke, Sendai-shi, 980-8577 (JP); ITO, Wakana, Kobe-shi, 651-0072 (JP); KITAURA, Takehiro, Kobe-shi, 651-0072 (JP)
(74) Representative: Manitz Finsterwald Patent- und Rechtsanwaltspartnerschaft mbB

(57) **Abstract**

To provide an analysis method that can analyze a crystal structure, a crystal morphology, a crystal distribution of a rubber material in stretching even in a local portion of the rubber material. The present invention relates to a method of analyzing a crystal structure, a crystal morphology, or a crystal distribution of a rubber material in stretching using a nanodiffraction imaging technique that analyzes an electron diffraction pattern acquired by scanning electron beams converged to a diameter of 100 nm or less on a surface of the rubber material while a behavior of stretching deformation of the rubber material and/or a state of the rubber material in stretching are observed using a transmission electron microscope.

## Description

### TECHNICAL FIELD

The present invention relates to a method of analyzing a crystal structure, a crystal morphology, or a crystal distribution of a rubber material in stretching.

### BACKGROUND ART

Conventionally, an approach of X-ray diffraction such as wide angle X-ray diffraction (WAXD) has been used to observe a state of a stretched crystal of an entire rubber material.

### SUMMARY OF INVENTION

### TECHNICAL PROBLEM

To grasp the state of a stretched crystal of an entire sample, an approach such as X-ray diffraction may be a powerful tool. However, how the stretched crystal is locally generated and how the stretched crystal acts on cracks need to be observed in actual space.

An object of the present invention is to solve the above problem and to provide an analysis method that can analyze a crystal structure, a crystal morphology, a crystal distribution of a rubber material in stretching even in a local portion of the rubber material.

### SOLUTION TO PROBLEM

The present invention relates to a method of analyzing a crystal structure, a crystal morphology, or a crystal distribution of a rubber material in stretching using a nanodiffraction imaging technique that analyzes an electron diffraction pattern acquired by scanning electron beams converged to a diameter of 100 nm or less on a surface of the rubber material while a behavior of stretching deformation of the rubber material and/or a state of the rubber material in stretching are observed using a transmission electron microscope.

### ADVANTAGEOUS EFFECTS OF INVENTION

The present invention is a method of analyzing a crystal structure, a crystal morphology, or a crystal distribution of a rubber material in stretching using a nanodiffraction imaging technique that analyzes an electron diffraction pattern acquired by scanning electron beams converged to a diameter of 100 nm or less on a surface of the rubber material while a behavior of stretching deformation of the rubber material and/or a state of the rubber material in stretching are observed using a transmission electron microscope. Therefore, it is possible to provide an analysis method that can analyze a crystal structure, a crystal morphology, a crystal distribution of a rubber material in stretching even in a local portion of the rubber material.

### BRIEF DESCRIPTION OF DRAWINGS

FIG. 1 is a view showing a relationship between nominal tensile strain (between chucks) and stress of a sample, a relationship between engineering strain (irradiated portion) and stress of the sample.
FIG. 2 is a schematic view that schematically shows a stretching deformation mechanism when an observation image is acquired by observing the state of the sample in stretching using a transmission electron microscope (FIG. 2(a)), and also a schematic view of an apparatus including annular dark field scanning transmission electron microscopy and a nanodiffraction imaging technique, as well as an observation approach (FIG. 2(b)).
FIG. 3 is a TEM image at the time of various strains in the stretching process of the sample.
FIG. 4 is an enlarged view of the void (gap) portions of the TEM image of FIG. 3 (the strain = 0, 2.4, 3.9, 6.1), and a schematic view showing the state of growing the voids.
FIG. 5 is a view showing the state of the crystal observed by the nanodiffraction imaging technique using annular dark field scanning transmission electron microscopy in the regions (1) and (2) in the portion of 12 divisions of the stretching TEM observation image of FIG. 3 (strain = 6.1).
FIG. 6 is a diffraction pattern obtained by integrating each of the nine figures of the electron diffraction figure (µ-ED figure), which is obtained by emitting micron-sized electron beams to a sample at a local portion in FIG. 5.
FIG. 7 is a diffraction pattern obtained from wide angle X-ray diffraction at a position apart from the void (gap) .

### DESCRIPTION OF EMBODIMENTS

An analysis method of the present invention is a method of analyzing a crystal structure, a crystal morphology, or a crystal distribution of a rubber material (sample) in stretching using a nanodiffraction imaging technique that analyzes an electron diffraction pattern acquired by scanning electron beams converged to a diameter of 100 nm or less on a surface of the rubber material (surface of the sample) while a behavior of stretching deformation of the rubber material (sample) and/or a state of the rubber material in stretching are observed using a transmission electron microscope.

In an approach involving X-ray diffraction such as WAXD, it is difficult to grasp a state of a crystal of a rubber material in stretching, particularly the state of the crystal at a local portion of the rubber material in stretching.

On the other hand, the present invention makes it possible to observe a state of a crystal with good precision even in a local portion of the rubber material in stretching by using a nanodiffraction imaging technique that analyzes an electron diffraction pattern. The electron diffraction pattern is obtained as follows. For example, a transmission electron microscope is used to observe a state of a rubber material in stretching. Then, with respect to a local portion of the thus-obtained electron microscopic image, a scanning transmission electron microscope method having atomic resolution is used to scan electron beams converged to a diameter of nanometer on the surface of the rubber material, to thereby acquire the electron diffraction pattern.

The stretched crystal is very vulnerable to electron beam damage. When a specific amount of electron beam dose is emitted to the stretched crystal, the diffraction peak of the stretched crystal disappears. Therefore, it is important to observe the stretched crystal by emitting electron beams as weak as possible. When the following steps: observing the stretched crystal by TEM; looking for a visual field; and diffraction are performed in this order, the diffraction peak cannot be obtained due to unintentional damage of electron beam that seems to be the image observation (looking for a visual field). On the other hand, in the present invention, after the diffraction figure is acquired while electron beams are comprehensively scanned without looking for the visual field, an image is selected. Such a procedure makes it possible to simplify a procedure to look for an observation visual field to make the measured visual field larger and to select a detailed analysis visual field at the time of analyzing a diffraction pattern. As a result, it is possible to observe, with good precision, a state of a crystal even in a local portion of a rubber material in stretching, specifically, a crystal structure, a crystal morphology, a crystal distribution of the rubber material.

Examples of the rubber material (sample) applicable to the above analysis method include samples containing a rubber component alone and samples of rubber compositions containing a rubber component and another component.

The rubber component is not limited, and, for example, a diene rubber can be used. Examples of the diene rubber include isoprene rubber, butadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). In addition, for example, butyl rubber and fluororubber are also exemplified. These may be used alone or in combination.

The rubber material (sample) may include a filler. Examples of the filler include silica, carbon black, calcium carbonate, talc, alumina, clay, aluminum hydroxide, aluminum oxide, and mica. For example, the above method can be suitably applied to a sample of a rubber composition containing silica and/or carbon black.

The rubber material (sample) may include the rubber component and another component other than the filler. For example, the above method can be suitably applied to a sample of a rubber composition that contains at least one compounding agent generally used in a tire industry, such as a plasticizer, an antioxidant, stearic acid, wax, zinc oxide, sulfur, and a vulcanization accelerator. Particularly, in terms of measurement of the stretching rate of a sample, a sample of a rubber composition containing zinc oxide can be suitably applied. When zinc oxide is included, the stretching rate in the observation visual field of the transmission electron microscopic image can be calculated from a distance between zinc oxides, in stretching.

The rubber material (sample) is produced by a typical method. For example, a rubber material (sample) can be produced by, for example, a method in which materials to be compounded are kneaded using a kneader such as a Banbury mixer or an open roll mill, followed by vulcanizing if necessary.

In the above analysis method, a usable transmission electron microscope (TEM) is not limited, but a scanning transmission electron microscope (STEM) is preferably used in terms of improvement of measurement precision. In the above method, use of the transmission electron microscope makes it possible to directly observe a state of the rubber material (sample) in stretching with good precision. Among them, desirably, a TEM image at various strains (in stretching) in the stretching process of the rubber material (sample) (an image acquired by in-situ observation of the rubber material by a tensile three-dimensional TEM) is acquired, and various states of the rubber material (sample) in stretching are directly observed.

In the above analysis method, in an observation image (transmission electron microscope image) acquired by directly observing a behavior of stretching deformation of the rubber material (sample) and/or a state of the rubber material (sample) in stretching using a transmission electron microscope, it is possible to observe the state of a crystal with good precision even in a local portion of a rubber material in stretching by using a nanodiffraction imaging technique (NDI technique), which analyzes an electron diffraction pattern acquired by scanning electron beams converged to a diameter of nanometer on a surface of the rubber material (sample surface) of a local portion in an electron microscopic image.

When the behavior of the stretching deformation of the rubber material (sample) and/or the state of the rubber material (sample) in stretching are directly observed using the transmission electron microscope, a local strain (ε) in an observation visual field of a transmission electron microscopic image is preferably 1 or more and more preferably 2 or more, and preferably 40 or less and more preferably 20 or less.

In the above analysis method, use of STEM having atomic resolution and use of a nanodiffraction imaging technique, which analyzes an electron diffraction (ED) pattern acquired by scanning electron beams converged to a diameter of nanometer on a surface of the rubber material using STEM, are desirable in terms of measurement precision. In the SETM-based NDI method, electron beams having a diameter of several nanometers are scanned in the order of nanometers, and an electron diffraction pattern (ED figure) or the like is acquired from each point, which makes it possible to visualize the distribution of the crystal structure in the scale of nanometers.

The spatial resolution of the scanning transmission electron microscope is preferably less than 0.2 nm and more preferably less than 0.1 nm in terms of measurement precision. The lower limit is not limited. A smaller spatial resolution is desirable.

For example, when the state of the crystal is observed using STEM by the NDI method, electron beams finely converged to a size of nanometers are desirably scanned on the sample in a nanometer step, to acquire an ED figure. In terms of measurement precision and reduction of damage to a sample, scanning is performed preferably in the nanometer step of 20 nm × 20 nm, and more preferably in the nanometer step of 5 nm × 5 nm.

Regarding the NDI measurement conditions, for example, the probe size is preferably φ 1 to φ 150 nm and more preferably φ 1 to φ 20 nm in terms of the spatial resolution. The total dose is preferably 1.0 × 10⁻⁶ to 1.0 × 10³ e⁻/Å² and more preferably 1.0 × 10⁻³ to 1.0 × 10³ e⁻/Å² in terms of measurement error, analysis accuracy, and reduction of damage to a sample. Here, the total dose is a value represented by dose rate × dwell time.

Here, one example of the analysis method of the present invention will be described below but is not limited to the following method.

As the sample (rubber material), for example, the rubber composition (vulcanized rubber composition) of the formulation 1 represented in Table 1 is prepared.

**[Table 1]**

| Blending conditions | Volume percentage (%) |
|---|---|
| Isoprene rubber (IR) | 90.91 |
| Stearic acid | 2.27 |
| Zinc oxide | 2.73 |
| Sulfur | 2.73 |
| Crosslinking accelerator | 1.36 |

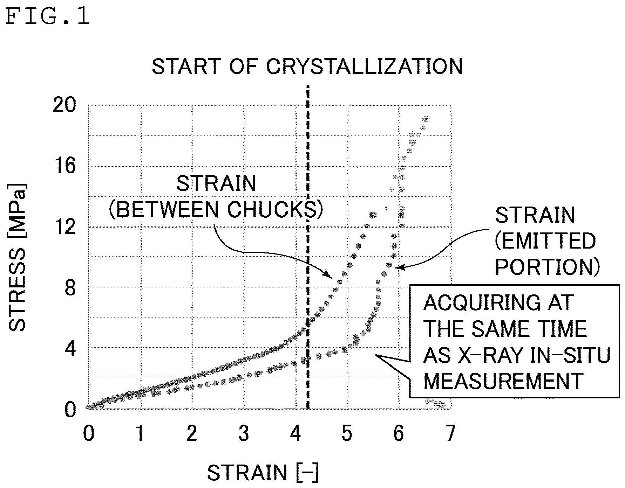

FIG. 1 illustrates a relationship between nominal tensile strain (between chucks) and stress, a relationship between engineering strain (emitted portion) and stress of the sample of the formulation 1. Here, before the stress of the sample increases, the crystallization starts.

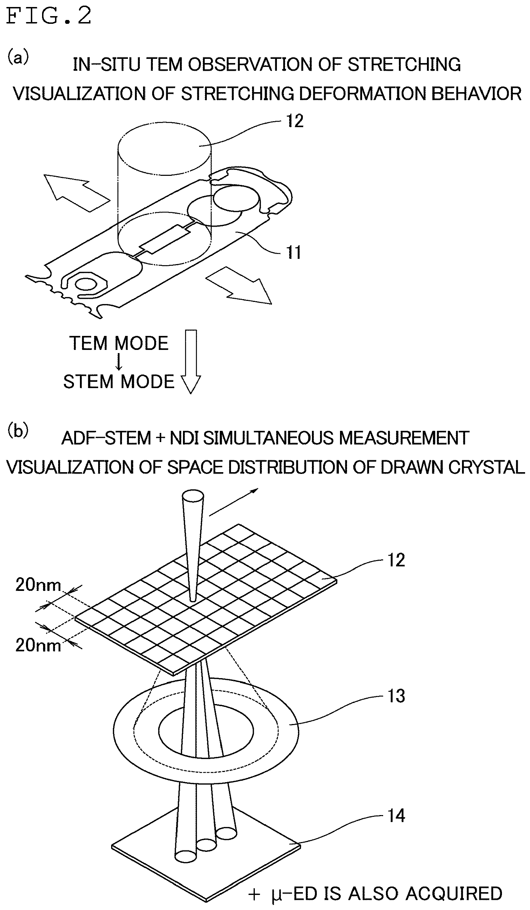

The upper figure of FIG. 2 (FIG. 2(a)) is a schematic view that schematically shows a stretching deformation mechanism when an observation image is acquired by observing the state of the sample (rubber material) in stretching using a transmission electron microscope. A three-dimensional TEM tensile holder 11 (sample cartridge) achieves the bidirectional drawing of the observed sample (rubber material) 12 (the observed sample is drawn in opposite directions at the same time). This makes it possible to stretch the sample in a bisectional drawing manner and allows observation of the sample using TEM without misalignment of the visual field in stretching.

Using a cryo-ultramicrotome, a thin slice is prepared from the sample of the formulation 1 with a diamond knife and is fixed on a sample cartridge. The fixed thin slice is observed using TEM at various stretchings (strains). One example of the preparation conditions of the thin slice (observed sample) is as follows but can be appropriately changed.

### (Preparation conditions)

Cryo-ultramicrotome: cutting temperature: -160°C
Thickness of film before stretching: 400 nm

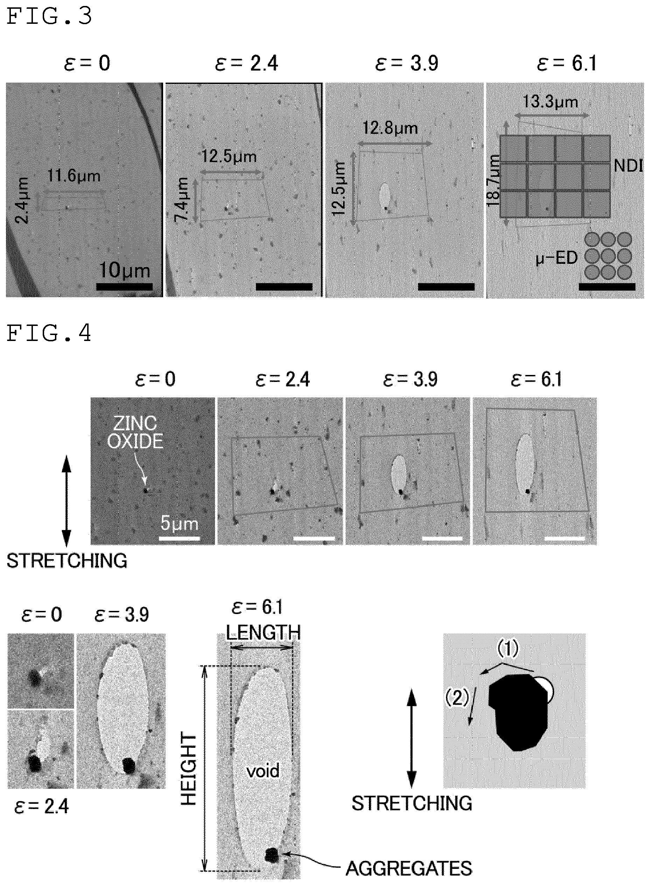

FIG. 3 is a TEM image at the time of various strains (ε) in the stretching process of the sample (ε = 0, 2.4, 3.9, 6.1). The dark section of the figure shows zinc oxide and the like, and the bright section shows a rubber matrix. The sample is stretched in the vertical direction in the observed visual field. Measuring the distance between the zinc oxide aggregates in each TEM image makes it possible to calculate strain in each stretching phase and the stretching rate. Because the state that the distance between the zinc oxide aggregates increases can be observed in synchronization with the motion of the three-dimensional TEM tensile holder 11, in-situ observation at various strains (observation of the corresponding portion at the stretched portion) in the stretching process of the sample can be performed without misalignment of the visual field in stretching. Regarding microscopic deformation, for example, occurrence of nanovoids or deformation of aggregates of zin oxide particles, the same visual field observed in situ by the three-dimensional TEM tensile holder 11 is very effective. One example of the observation conditions of TEM in stretching is as follows but can be appropriately changed.

### (Observation conditions of TEM in stretching)

Resolution: 7.14 nm
Dose amount: 6.2 × 10⁻⁴ e⁻/(Å²·sheet)

FIG. 4 is an enlarged view of the void (gap) portions of the TEM image of FIG. 3 (the strain (ε) = 0, 2.4, 3.9, 6.1), and a schematic view showing the state of growing the voids. The enlarged view of the void portion shows that when the sample is stretched to ε = 6.1, the void generates and grows near zinc oxide. In addition, from the schematic view showing the void growth, it is found that the void grows along the boundary of the rubber/zinc oxide in the case of low strain, and the void grows drastically when the stretching strain is a predetermined value or higher (for example, ε > 2.0), which indicates that the void behaves near zinc oxide in the two-phase growth process.

In the above analysis method, the sample is observed by TEM at various strains (ε) in the stretching process, and the same time, for example, annular dark field scanning transmission electron microscopy (ADF-STEM) can be used to observe the state of the crystallization of the rubber material in stretching using the nanodiffraction imaging technique (NDI). The lower figure of FIG. 2 (FIG. 2(b)) is a schematic view schematically showing an apparatus including ADF-STEM and NDI for use at that time and the observation approach. Here, while annular dark field scanning transmission electron microscopy is used to observe an image, the above nanodiffraction imaging technique can be used to observe the state of the crystal inside the rubber material in stretching. ADF-STEM is a method in which finely converged electron beams are emitted to a sample while scanned on the sample, and electrons scattered at high angles of transmitted electrons are detected by an annular detector, to display an integrated intensity of the detected electrons.

In FIG. 2(b), one example of a scanning transmission electron microscope (STEM) is, for example, an apparatus provided with an electron source configured to output electron beams, a converging lens configured to converge the electron beams output from the electron source, and an objective lens configured to focus the focal point of the electron beams output from the electron source to the position of the sample. The converging lens can converge, for example, electron beams to a nanometer level or less. The scanning transmission electron microscope is arranged between, for example, the electron beam source and the objective lens. One example of the scanning transmission electron microscope is, for example, an apparatus equipped with a scanning coil configured to scan electron beams on the surface of a sample and an image forming lens configured to allow the electron beams passing through the sample to form an image on an image surface.

The apparatus of FIG. 2(b) is provided with an annular dark field detector (ADF Detector) 13 arranged on the image formation plane on which a dark field image is formed and is also provided with a pixel detector 14. FIG. 2(b) further shows that electron diffraction (ED) measurement is performed, and specifically shows that an image of microelectron diffraction (µ-ED) is acquired.

When the state of crystallization is observed using the ADF-STEM and the NDI method, it is possible to use the electron microscopic approach (nanodiffraction imaging, NDI) in which the acquired numerous electron diffraction patterns are analyzed while electrons finely converged to a nanometer size are scanned on the sample in a nanometer step (in FIG. 2(b), 20 nm × 20 nm), and the structural parameters such as the rate of crystallization are subjected to mapping at a nanometer scale. One example of the NDI measurement conditions is as follows but can be appropriately changed.

### (NDI measurement conditions)

pixel size: 20 × 20 nm²
probe size: φ 20 nm
dwell time: 5.0 × 10⁻³ s
Total dose: 8.0 e⁻/Å²
pixel detector: STELA camera
camera length: 400 mm

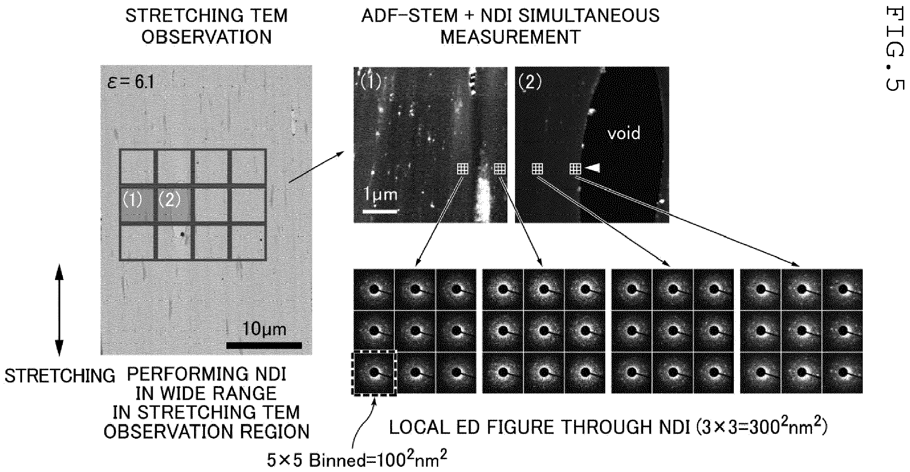

FIG. 5 shows the state of the crystal observed by the nanodiffraction imaging technique (NDI technique) using annular dark field scanning transmission electron microscopy (ADF-STEM) having atomic resolution in the regions (1) and (2) in the portion of 12 divisions (3 × 4) of the stretching TEM observation image of FIG. 3 (strain (ε) = 6.1). The region (2) shows the portion where the void generates, and the region (1) shows the ADF-STEM image of the portion apart from the void.

Regarding two portions (local portions) in the region (1) and two portions (local portions) in the region (2), the µ-ED figure consisting of nine portions (one set) shown in FIG. 5 is the diffraction pattern (5 × 5 Bined, 100² nm²) obtained by integrating 5 × 5 (25) patterns (pixel size: 20 × 20 nm²) of each of the respective figures constituting the above nine portions (each diffraction pattern).

When a diffraction pattern obtained by such electron diffraction is analyzed, an integrated region of diffraction pattern is preferably a region of 1 × 1 to 1000 × 1000 nm² and more preferably a region of 5 × 5 to 150 × 150 nm², in terms of measurement precision. In the case of FIG. 5, the integrated region is 100 × 100 nm².

The µ-ED figure (3 × 3, 300² nm²) at a local portion, which constitutes nine portions of one diffraction pattern (5 × 5 Bined, 100² nm²) obtained by integrating the above 5 × 5 (25) patterns as one set, is shown. One example of the emitting conditions of electron beams of the electron diffraction is as follows but can be appropriately changed.

### (Emitting conditions of electron beams)

Dose rate: 2.9 × 10⁻³ e⁻/Å²
Exp. time: 5.0 s
Total dose: 0.015 e⁻/Å²
beam size: φ 2.1 µm

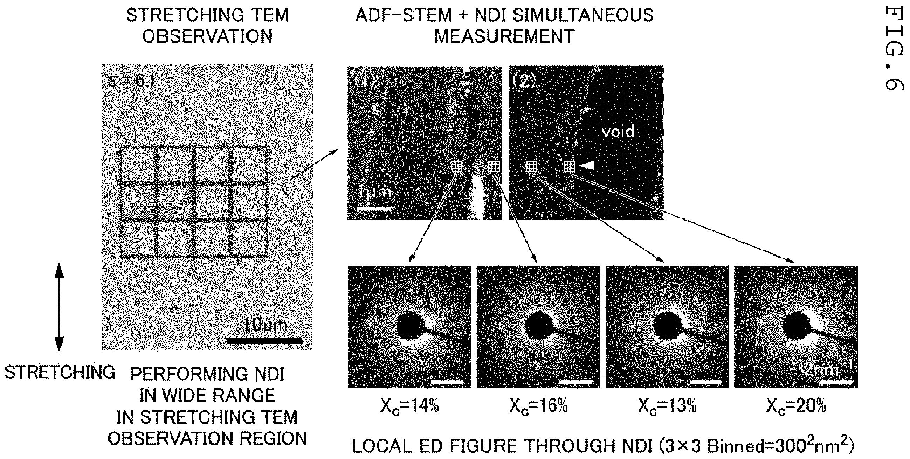

FIG. 6 shows a diffraction pattern (3 × 3 Bined, 300² nm²) obtained by integrating each of the nine figures of the µ-ED figure (3 × 3, 300² nm²) at a local portion, the µ-ED figure consisting of nine portions of FIG. 5 as one set. From the integrated diffraction pattern obtained from integration of the nine figures, the degree of crystallinity Xc at each of the portions can be calculated, and is calculated as 14%, 16%, 13%, 20%, respectively. FIG. 6 indicates that the degree of crystallinity is almost the same in the portion apart from the void, but the degree of crystallinity is high near the void.

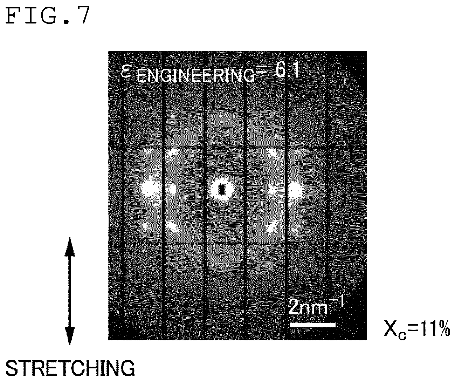

Note that, FIG. 7 shows a diffraction pattern obtained from wide angle X-ray diffraction (WAXD) of the portion apart from the void. Since the degree of crystallinity of 11% obtained from this diffraction pattern of the WAXD and the degrees of crystallinity of 13 to 16% obtained from the µ-ED of portions apart from the void in FIG. 6 almost correspond to each other, the validity of the above-described µ-ED analysis can be confirmed. One example of the WAXD measurement conditions is as follows but can be appropriately changed.

### (Measurement conditions)

Type-7 dumbbell test piece
Beam Size: 350 × 0.400 µm²

As described above, reconsideration of the procedure of the observation of TEM images, the diffraction measurement, and use of a nanodiffraction imaging technique that analyzes an electron diffraction pattern acquired by scanning converged electron beams on a surface of the rubber material while a state of the rubber material in stretching is observed using a transmission electron microscope (i.e., performing the procedure in which after a diffraction figure is acquired while electron beams are comprehensively scanned without looking for a visual field, an image is selected) make it possible to reduce the damage of electron beams on the sample. As a result, an electron diffraction peak of a drawn crystal can be detected and the state of crystallization of the rubber material in stretching can be analyzed.

Particularly, in addition to in-situ TEM observation of stretching, implementation and analysis of simultaneous measurements of ADF-STEM and NDI make it possible to obtain the indication that, for example, the drawn crystal at a high strain region (ε = 6.1 etc.) has a high degree of crystallinity near a void.

Therefore, it is believed that such an analysis method of the present invention could unravel an influence of a behavior of local deformation on the space/orientation distribution of the drawn crystal.

The present invention (1) is a method of analyzing a crystal structure, a crystal morphology, or a crystal distribution of a rubber material in stretching using a nanodiffraction imaging technique that analyzes an electron diffraction pattern acquired by scanning electron beams converged to a diameter of 100 nm or less on a surface of the rubber material while a behavior of stretching deformation of the rubber material and/or a state of the rubber material in stretching are observed using a transmission electron microscope.

The present invention (2) is the method according to the present invention (1),
wherein the nanodiffraction imaging technique is performed under measurement conditions described below:
(measurement conditions)
probe size: φ 1 to φ 150 nm
total dose: 1.0 × 10⁻⁶ to 1.0 × 10³ e⁻/Å².

The present invention (3) is the method according to the present invention (1) or (2),
wherein when a diffraction pattern obtained by performing a further electron diffraction is analyzed, an integrated region of the diffraction pattern is a region of 1 × 1 to 1000 × 1000 nm².

The present invention (4) is a combination method according to any one of the present inventions (1) to (3),
wherein a local strain in an observation visual field of a transmission electron microscopic image is 1 to 40.

### REFERENCE SIGNS LIST

11 three-dimensional TEM tensile holder (sample cartridge)
12 observed sample (rubber material)
13 annular dark field detector
14 pixel detector

## Claims

1. A method of analyzing a crystal structure, a crystal morphology, or a crystal distribution of a rubber material in stretching using a nanodiffraction imaging technique that analyzes an electron diffraction pattern acquired by scanning electron beams converged to a diameter of 100 nm or less on a surface of the rubber material while a behavior of stretching deformation of the rubber material and/or a state of the rubber material in stretching are observed using a transmission electron microscope.

2. The method according to claim 1,
wherein the nanodiffraction imaging technique is performed under measurement conditions described below:
(measurement conditions)
probe size: φ 1 to φ 150 nm
total dose: 1.0 × 10⁻⁶ to 1.0 × 10³ e⁻/Å².

3. The method according to claim 1 or 2,
wherein when a diffraction pattern obtained by performing a further electron diffraction is analyzed, an integrated region of the diffraction pattern is a region of 1 × 1 to 1000 × 1000 nm².

4. The method according to any one of claims 1 to 3,
wherein a local strain in an observation visual field of a transmission electron microscopic image is 1 to 40.
